(19) **Europäisches Patentamt**
**European Patent Office**
**Office européen des brevets**

(11) **EP 4 393 689 A1**

(12) **EUROPEAN PATENT APPLICATION**

(43) Date of publication:
**03.07.2024 Bulletin 2024/27**

(21) Application number: **23220788.6**

(22) Date of filing: **29.12.2023**

(51) International Patent Classification (IPC):
**B32B 1/00** *(2024.01)* **B32B 27/08** *(2006.01)*
**B32B 27/32** *(2006.01)* **B32B 27/34** *(2006.01)*
**B32B 27/36** *(2006.01)* **C08J 5/18** *(2006.01)*
**H01M 50/105** *(2021.01)* **H01M 50/126** *(2021.01)*
**H01M 50/129** *(2021.01)* **B32B 15/08** *(2006.01)*
**B32B 15/085** *(2006.01)* **B32B 15/088** *(2006.01)*
**B32B 15/09** *(2006.01)* **B32B 15/18** *(2006.01)*

(52) Cooperative Patent Classification (CPC):
**B32B 1/00; B32B 15/08; B32B 15/085;**
**B32B 15/088; B32B 15/09; B32B 15/18;**
**B32B 27/08; B32B 27/32; B32B 27/34;**
**B32B 27/36; C08J 5/18; H01M 50/105;**
**H01M 50/121; H01M 50/124; H01M 50/126;**

(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.12.2022 KR 20220191241**

(71) Applicant: **Youlchon Chemical Co., Ltd.**
**Seoul 07057 (KR)**

(72) Inventors:
• **SONG, Nok Jung**
**07057 Seoul (KR)**

• **HAN, Hee Sik**
**15430 Ansan-si (KR)**
• **LEE, Doohee**
**15430 Ansan-si (KR)**
• **JANG, Jee Eun**
**15430 Ansan-si (KR)**
• **KIM, Yoohan**
**15430 Ansan-si (KR)**
• **SHIN, Sung Chul**
**15430 Ansan-si (KR)**
• **SONG, Moonkyu**
**15430 Ansan-si (KR)**

(74) Representative: **V.O.**
**P.O. Box 87930**
**2508 DH Den Haag (NL)**

(54) **POUCH FILM FOR SECONDARY BATTERY WITH EXCELLENT ROOM TEMPERATURE AND HIGH TEMPERATURE SEALING STRENGTH CHARACTERISTICS IN WHICH TEARING THICKNESS RATIO OR TEARING THICKNESS DIFFERENCE IS CONTROLLED, METHOD FOR PREPARING THE SAME, SECONDARY BATTERY USING THE SAME, AND METHOD FOR MANUFACTURING THE SECONDARY BATTERY**

(57) Disclosed is a secondary electrode pouch film comprising at least an outer layer, a barrier layer, and a sealant layer laminated sequentially, wherein the sealant layer thickness T1 and T2 measured according to a tear test method satisfy $0.6 < T1 / T2 < 0.85$ or $30pm < T2 - T1 < 85pm$, respectively, a secondary battery using the same, and a method for preparing the same. The pouch film has excellent sealing strength at ambient temperature and high temperature, as well as excellent sealing strength maintenance characteristics at ambient temperature, and especially excellent sealing strength maintenance characteristics at high temperature.

**(Cont. next page)**

EP 4 393 689 A1

(52) Cooperative Patent Classification (CPC): (Cont.)
**H01M 50/129;** B32B 2250/03; B32B 2250/24;
B32B 2255/10; B32B 2255/205; B32B 2307/102;
B32B 2307/206; B32B 2307/30; B32B 2307/306;
B32B 2307/308; B32B 2307/31; B32B 2307/582;
B32B 2307/5825; B32B 2307/7242;
B32B 2307/7376; B32B 2307/738;
B32B 2307/752; B32B 2439/06; B32B 2457/10

**Description**

**Technical Field**

The present disclosure relates to a pouch film for a secondary battery with excellent ambient temperature and high temperature sealing strength characteristics in which a tear thickness ratio or a tear thickness difference is controlled, a method for preparing the same, a secondary battery using the same, and a method for manufacturing the secondary battery. More particularly, it relates to a pouch film for a secondary battery having excellent thermal bonding strength, that is, sealing strength, at ambient temperature and high temperature, and excellent sealing strength maintenance properties at ambient temperature and especially high temperature, a method for preparing the same, a secondary battery using the same, and a method for manufacturing the secondary battery.

[National Research and Development Project Supporting The Present Invention]
[Assignment unique number] 1415181922
[Assignment number] 20022450
[Name of ministry] Ministry of Trade, Industry and Energy
[Name of project management organization] Korea Institute of Industrial Technology Evaluation and Planning
[Research project name] Material/Parts Package Type (Top Company)
[Research assignment name] Development of a next-generation secondary battery pouch capable of realizing more than twice the high adhesive strength at 60°C
[Contribution rate] 1/1
[Name of agency in charge of assignment] Youlchon Chemical Co., Ltd.
[Research period] 2022-09-01 ~ 2022-12-31
[Assignment unique number] 1415185612
[Assignment number] 20022450
[Name of ministry] Ministry of Trade, Industry and Energy
[Name of project management organization] Korea Institute of Industrial Technology Evaluation and Planning
[Research project name] Material/Parts Package Type (Top Company)
[Research assignment name] Development of a next-generation secondary battery pouch capable of realizing more than twice the high adhesive strength at 60°C
[Contribution rate] 1/1
[Name of agency in charge of assignment] Youlchon Chemical Co., Ltd.
[Research period] 2023-01-01 ~ 2023-12-31

**Background Art**

Lithium secondary batteries (LiB) are being applied to many applications based on various advantages such as high energy density and excellent output.
As a laminated film for encasing a secondary battery, with a multilayer structure that surrounds an electrode group and an electrolyte of the secondary battery, a secondary battery pouch film is a key component material that determines the battery's stability, lifespan characteristics, and operational sustainability and requires mechanical flexibility and strength, high oxygen/water vapor barrier properties, high thermal sealing strength, chemical resistance to electrolyte solutions, electrical insulation, and high temperature stability, etc.
Secondary battery pouch film typically consists of an outer layer, a barrier layer, and an inner sealant layer.
The outer layer or outermost layer is made of nylon, a blend of nylon and polyethylene terephthalate (PET), oriented polypropylene (OPP), polyethylene, and the like. The outer layer or outermost layer requires heat resistance, pinhole resistance, chemical resistance, formability, and insulation, etc.
The barrier layer requires formability as well as barrier properties against water vapor and other gases. In this respect, metals with formability such as aluminum (Al), iron (Fe), copper (Cu), and nickel (Ni) etc. are used in the barrier layer, and aluminum is currently used the most.
Since the sealant layer which is an inner layer is in contact with the electrolyte, it requires electrolyte resistance, and insulation resistance etc. as well as thermal adhesiveness and formability.
As the application of LiB is expanded from small-sized to medium-sized to large-sized fields such as automobiles and energy storage systems (ESS), secondary battery pouch films also need characteristics suitable for medium-sized to large-sized fields that require high safety.
Therefore, it is necessary to have excellent sealing strength not only at ambient temperature and but especially at high temperature (60°C), and furthermore, it is necessary that the sealing strength be maintained and not deteriorated at ambient temperature and especially at high temperature, but achieving and maintaining high sealing strength at ambient and high temperatures is challenging in the actual manufacturing of pouch films used in medium-sized and large-sized secondary batteries.

Disclosure of Invention

Technical Problem

In exemplary embodiments of the present disclosure, there is provided, in one aspect, a pouch film for a secondary battery which has excellent sealing strength at ambient temperature and excellent sealing strength at high temperature, as well as maintenance properties of the ambient temperature sealing strength, and especially excellent maintenance properties of the high temperature sealing strength, a preparation method thereof, a secondary battery using the same, and a manufacturing method thereof.

**Solution to Problem**

In exemplary embodiments of the present disclosure, there is provided a secondary battery pouch film, wherein at least an outer layer, a barrier layer, and a sealant layer are structured in that order, in which the sealant layer is extrusion laminated by an extruded coating layer, and the sealant layer thickness T1 and T2 measured according to the tear test method below satisfy [Formula 1] and/or [Formula 2], respectively, and a method for preparing the same.

$$[\text{Formula 1}]$$
$$0.6 < T1 / T2 < 0.85$$

$$[\text{Formula 2}]$$
$$30\mu m < T2 - T1 < 85\mu m$$

**[Tear test method]**

A secondary battery pouch film is folded in half, with the sealant layer facing each other, and sealed at 200°C for 1.6 seconds. After sealing, the sample size is 20cm wide by 5cm long, and the sample is cut into 1.5cm long strips.

Both ends of the sample are grasped with the universal testing machine (UTM) and pulled (the pulling condition is 5 mm/min). After pulling to tear at least about 5 mm from the sealing part of the pouch film, the thickness (T1) of the side (upper side) where the thickness of the tear is relatively thin or the same, and the thickness (T2) of the side (lower side) where the thickness of the tear is relatively thick or the same is measured, respectively, using a thickness gauge. That is, $T2 \geq T1$.

In an exemplary embodiment, the secondary battery pouch film may have a maximum ambient temperature sealing strength measured value of at least 150 N/15 mm and no more than 205 N/15 mm in the TD direction when sealed under 220°C sealing conditions as measured by the method below.

**[Method of measuring maximum sealing strength at ambient temperature when sealed under the condition of sealing at 220°C]**

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm x a seal thickness of 10 mm, 2.0 seconds, 0.2 MPa, and a temperature of 220°C.

The sealing strength of a specimen in each of the MD and TD directions is measured at ambient temperature by a sealing strength meter, and the measurement is carried under a condition of a test speed of 10 mpm and a grip gap of 30 mm.

A maximum value of the sealing strength measurement values is a maximum sealing strength.

In an exemplary embodiment, the secondary battery pouch film may have a maximum high temperature sealing strength measurement value (sealing strength measured after being left for 3 minutes at 60°C) in the TD direction of at least 115 N/15 mm and no more than 170 N/15 mm when sealed under 220°C sealing conditions as measured by the method below.

**[Method of measuring maximum sealing strength at high temperature when sealed under the condition of sealing at 220°C]**

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm x a seal thickness of 10 mm, 2.0 seconds, 0.2 MPa, and a temperature of 220°C.

The sealing strength of a specimen in at least one of the MD and TD directions is measured after being left at 60°C for 3 minutes by a sealing strength meter, and the measurement is carried under a condition of a test speed of 10 mpm and a grip gap of 30 mm.

A maximum value of the sealing strength measurement values is a maximum sealing strength.

In an exemplary embodiment, the secondary battery pouch film may have a ambient temperature energy in the TD direction when sealed under 220°C sealing conditions as measured by the method below of 2.0 to 3.0 KN x mm.

**[Measurement of ambient temperature energy in TD direction when sealed under condition of sealing at 220°C]**

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm, a seal thickness of 10 mm, 2.0 seconds, 0.2 MPa, and a temperature of 220°C.

The sealing strength change is measured by pulling the specimen in the TD direction with the sealing strength meter at ambient temperature, and the measurement is carried under a condition of a test speed of 10 mpm and a grip gap of 30 mm.

When the X-axis is a stroke (distance) of pulling the sealing part in the TD direction and the Y-axis is a sealing strength, an area between the graph for sealing strength change according to the stroke and the X-axis representing the stroke - an integral value of the graph for sealing strength change according to the stroke - is defined as an ambient temperature energy, where the integral value is obtained by integrating the stroke in the range of 0 mm to 20 mm.

In an exemplary embodiment, the secondary battery pouch film may have a high temperature energy in the TD direction when sealed under 220°C sealing conditions as measured by the method below of 1.5 to 2.5 KN x mm.

**[Measurement of high temperature energy in TD direction when sealed under condition of sealing at 220°C]**

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm, a seal thickness of 10 mm, 2.0 seconds, 0.2 MPa, and a temperature of 220°C.

The sealing strength change is measured by pulling the specimen in the TD direction with the sealing strength meter at high temperature after being left for 3 minutes at 60°C, and the measurement is carried under a condition of a test speed of 10 mpm and a grip gap of 30 mm.

When the X-axis is a stroke (distance) of pulling the sealing part in the TD direction and the Y-axis is the sealing strength, an area between the graph for sealing strength change according to the stroke and the X-axis representing the stroke - an integral value of the graph for sealing strength change according to the stroke - is defined as a high temperature energy, where the integral value is obtained by integrating the stroke in the range of 0 mm to 20 mm.

In an exemplary embodiment, the secondary battery pouch film may have a difference of 0.4 to 0.6 KN x mm between the ambient temperature energy and the high temperature energy in the TD direction when sealed under 220°C sealing conditions as measured by the method below.

**[Measurement of ambient temperature energy and high temperature energy in the TD direction when sealed under condition of sealing at 220°C]**

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm x a seal thickness of 10 mm, 2.0 seconds, 0.2 MPa, and a temperature of 220°C.

The change in the sealing strength is measured by pulling the specimen in the TD direction with the sealing strength meter at ambient temperature or at high temperature after being left for 3 minutes at 60°C, and the measurement is carried under a condition of a test speed of 10 mpm and a grip gap of 30 mm.

When the X-axis is a stroke (distance) of pulling the sealing part in the TD direction and the Y-axis is the sealing strength, an area between the graph for sealing strength change according to the stroke and the X-axis representing the stroke - an integral value of the graph for sealing strength change according to the stroke - is defined as an ambient temperature energy or a high temperature energy, wherein the integral value is obtained by integrating the stroke in the range of 0 mm to 20 mm.

The energy measured at ambient temperature is an ambient temperature energy, and the energy measured at high temperature is a high temperature energy.

In an exemplary embodiment, the secondary battery pouch film may have an ambient temperature maximum stroke in the TD direction of 15 to 25 mm when sealed under 220°C sealing conditions as measured by the method below.

**[Measurement of ambient temperature maximum stroke in TD direction when sealed under condition of sealing at 220°C]**

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm x a seal thickness of 10 mm, 2.0 seconds, 0.2 MPa, and a temperature of 220°C.

The sealing strength change is measured by pulling the specimen in the TD direction with the sealing strength meter at ambient temperature, and the measurement is carried under a condition of a test speed of 10 mpm and a grip gap of 30 mm.

When the X-axis is a stroke (distance) of pulling the sealing part in the TD direction and the Y-axis is the sealing strength, a sealing strength curve increases as the stroke increases, and the stroke (distance) at which the sealing strength value is maximum is evaluated as a maximum stroke.

In an exemplary embodiment, the secondary battery pouch film may have a high temperature maximum stroke in the TD direction of 18 to 24 mm when sealed under 220°C sealing conditions as measured by the method below.

**[Measurement of high temperature maximum stroke in TD direction when sealed under condition of sealing at 220°C]**

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm x a seal thickness of 10 mm, 2.0 seconds, 0.2 MPa, and a temperature of 220°C.

The sealing strength change is measured by pulling the specimen in the TD direction with the sealing strength meter at high temperature after being left for 3 minutes at 60°C, and the measurement is carried under a condition of a test speed of 10 mpm and a grip gap of 30 mm.

When the X-axis is a stroke (distance) of puling the sealing part in the TD direction and the Y-axis is the sealing strength, the sealing strength curve increases as the stroke increases, and the stroke (distance) at which the sealing strength value is maximum is evaluated as the maximum stroke.

In addition, exemplary embodiments of the present disclosure provide a secondary battery encased with the secondary battery pouch film described above.

In an exemplary embodiment, the secondary battery may be for an electric vehicle or energy storage device.

In addition, exemplary embodiments of the present disclosure provide a method for manufacturing a secondary battery including encasing the secondary battery with the secondary battery pouch film described above.

**Advantageous Effects of Invention**

The pouch film of the exemplary embodiments of the present disclosure has excellent sealing strength at ambient temperature and high temperature, as well as excellent sealing strength maintenance characteristics at ambient temperature and excellent sealing strength maintenance characteristics at high temperature, by controlling the thickness (T1) of the side (upper side) where the thickness of the tear is relatively thin or the same, and the thickness (T2) of the side (lower side) where the thickness of the tear is relatively thick or the same, when the sealant layer of the pouch film is torn.

Such secondary battery pouch films are useful for pouches for medium-sized to large-sized secondary batteries, such as those in electric vehicles or energy storage devices, where safety, particularly high temperature safety, is required.

**Brief Description of Drawings**

The above and other aspects, features and advantages of the disclosed exemplary embodiments will be more apparent from the following detailed description taken in conjunction with the accompanying drawings in which:

FIG. 1 is a schematic diagram illustrating a secondary battery pouch film configuration manufactured by the EC method in an exemplary embodiment of the present disclosure.

FIG. 2 is a schematic diagram illustrating torn parts of a sealant layer upon tearing in an exemplary embodiment of the present disclosure.

**Mode for the Invention**

Exemplary embodiments are described more fully hereinafter. The invention may, however, be embodied in many different forms and should not be construed as limited to the exemplary embodiments set forth herein. Rather, these exemplary embodiments are provided so that this disclosure will be thorough and complete, and will fully convey the scope of the invention to those skilled in the art. In the description, details of features and techniques may be omitted to more clearly disclose exemplary embodiments.

Term Definition

In this disclosure, when a secondary battery pouch film includes layer(s), the secondary battery pouch does not necessarily consist of only that layer, and additional layers may be included therein.

In this disclosure, being formed "on" a specific layer includes not only being formed directly on that layer, but also being formed after interposing another additional layer in between.

In this disclosure, a specimen stretches in proportion to an increase in load, but when exceeding the elastic limit, it begins to stretch out of proportion to the load. This point is called a yield point, and a force applied to the yield point is called a yield strength.

In this disclosure, an upper yield strength refers to a maximum value (peak value) of the yield strength. That is, a yield point includes an upper yield point (the point where the yield strength is the maximum among yield points) and a lower yield point (the point where the yield strength is the minimum among yield points). An upper yield strength refers to a maximum value (peak value) of the yield strength at the yield point [i.e., a yield strength at the upper yield point], and a lower yield strength refers to a minimum value of the yield strength at the yield point [i.e., a yield strength at the lower yield point]. Depending on a yield strength measurement target, the upper yield point and lower yield point may be the same.

In this disclosure, an extrusion coating (EC) layer refers to an extrusion coating layer among the sealant layer [hereinafter, referred to as an extrusion layer or an extrusion (EC) layer] wherein a resin such as a polyolefin-based resin has been extrusion-coated for lamination with the barrier layer. The extrusion (EC) layer of the sealant layer is located on the barrier layer side relative to the polypropylene-based resin layer as described below.

In this disclosure, the polypropylene-based resin layer of the sealant layer is a core resin layer that makes up the sealant layer, plays a sealing role, and consists of one or more layers. It is contrasted with the above-described extruded (EC) layer for bonding or laminating with the barrier layer and is located on the inside of the pouch film (i.e., on the opposite side of the barrier layer) relative to the above-described extruded (EC) layer.

In this disclosure, upper side of torn part means the side where the thickness of the torn part when the sealant layer is torn is relatively thin or the same, and lower side of the torn part means the side where the thickness of the torn part when the sealant layer is torn is relatively thick or the same. That is, the thickness of the lower side T2 $\geq$ thickness of the upper side T1.

In this disclosure, energy refers to an item that evaluates the sealing strength maintenance characteristics, and corresponds to an area in a stroke section (0 to 20mm) of a graph for sealing strength change when measuring the sealing strength change (Y-axis) according to a stroke (distance) [X-axis] of pulling a sealing part, i.e., an integral value of the graph for sealing strength change in the stroke section (0 to 20mm) according to the stroke (distance) [X-axis]. It can be expressed as energy since the integral value is obtained by multiplying the force by the distance.

In this disclosure, a maximum stroke is also an item that can evaluate the sealing strength maintenance characteristics. As the stroke (distance) pulling the sealing part increases, the sealing strength increases, and the stroke (distance) at which the sealing strength value reaches its maximum is called the maximum stroke.

In this disclosure, ambient temperature may refer to a temperature of 20 $\pm$ 5 °C.

Description of Exemplary Embodiments

Exemplary embodiments of the present disclosure are described below.

Exemplary embodiments of the present disclosure are described in detail below.

A method for preparing a sealant layer when manufacturing a secondary battery pouch film may include an extrusion lamination and a solvent-dry lamination (hereinafter referred to as SDL).

The SDL is a technique of adhering a barrier layer (metal layer) onto a polypropylene (PP) layer using a solvent-type adhesive and drying the solvent-type adhesive, and a sealant layer produced according to the aforementioned technique is made up of the polypropylene (PP) layer. The solvent-type adhesive may remain in the polypropylene (PP) layer after drying, but since its thickness is about $4\mu m$ or less and is insignificant, the thickness may be ignored.

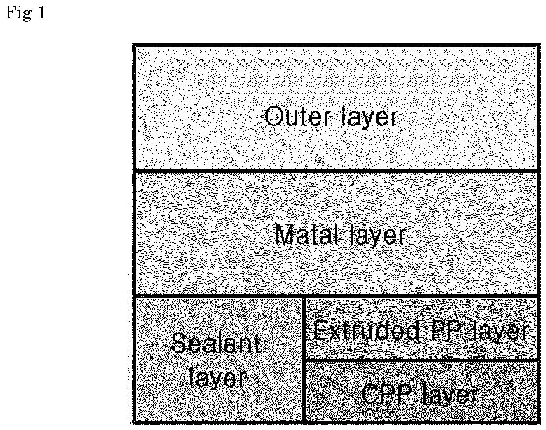

Meanwhile, the extrusion lamination is a technique of extruding a polyolefin based resin, preferably a polypropylene resin, when adhering polypropylene based resin layer, especially cast polypropylene (CPP) resin layer, which is mainly used in the sealant layer, to the barrier layer (metal layer). As a result, the sealant layer is composed of an extrusion coating (EC) layer (mainly an extrusion polypropylene layer) and the polypropylene (PP) layer below the extrusion (EC) layer (inside of the pouch film), preferably the cast polypropylene (CPP) layer (see FIG. 1).

In a secondary battery pouch film prepared by an extrusion lamination preparation method, the inventors of the present disclosure found that the thickness of the upper side (the part which remains the same or relatively less thick) at the time of the following tear test is different from the thickness of the lower side (the part which remains the same or relatively more thick), and in addition to the different thicknesses, if the film is torn in such a way that the lower side remains thicker than the upper side while the thickness of the upper side (T1) and the thickness of the lower side (T2) satisfy the following formula, it is confirmed that the ambient temperature and high temperature sealing strength is excellent, and in particular, the ambient temperature and high temperature sealing strength maintenance characteristics are excellent.

$$[\text{Formula 1}]$$

$$0.6 < T1 / T2 \text{ (tearing thickness ratio)} < 0.85$$

$$[\text{Formula 2}]$$

$$30\mu m < T2 - T1 \text{ (tearing thickness difference)} < 85\mu m$$

[Tear test method]

A secondary battery pouch film is folded in half, with the sealant layer facing each other, and sealed at 200°C for 1.6 seconds. After sealing, the sample size is 20cm wide by 5cm long, and the sample is cut into 1.5cm long strips.

Both ends of the sample are grasped with the universal testing machine (UTM) and pulled (the pulling condition is 5 mm/min). After pulling to tear at least about 5 mm from the sealing part of the pouch film, the thickness (T1) of the side (upper side) where the thickness of the tear is relatively thin or the same, and the thickness (T2) of the side (lower side) where the thickness of the tear is relatively thick or the same is measured, respectively, using a thickness gauge.

Sealing strength characteristics, especially high temperature sealing strength characteristics, are essential for the safety of medium and large-sized batteries such as automotive batteries, and it is necessary to maintain high temperature sealing strength as much as possible to ensure the safety of medium and large-sized batteries, especially in high temperature environments. However, it is difficult to control the sealing strength characteristics, especially the high-temperature sealing strength characteristics, and especially the maintenance characteristics of the high-temperature sealing strength, because multiple layers are laminated when manufacturing the pouch film, and various manufacturing conditions are involved in the manufacturing of the sealant layer.

As described above, when the tear thickness ratio or the tear thickness difference when the pouch film is pulled is adjusted to be within a certain range, it can be seen that the ambient temperature and high temperature sealing strength is excellent, and especially the ambient temperature and high temperature sealing strength maintenance characteristics are excellent.

It is understood that the tear thickness ratio or tear thickness difference when adopting the extrusion lamination method is not only related to the ambient temperature and high temperature sealing strength, but especially to the maintenance characteristics of the high temperature sealing strength.

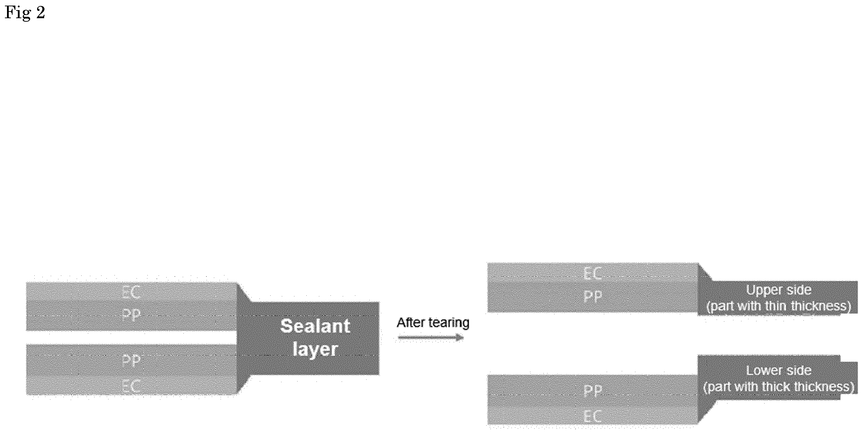

FIG. 2 is a schematic diagram illustrating torn parts of a sealant layer upon tearing in an exemplary embodiment of the present disclosure.

As shown in FIG. 2, when sealing in a secondary battery pouch film manufactured by extrusion lamination, the two sealant layers that are in contact with each other merge (i.e., form a sealing portion). In this state, when tearing proceeds, a crack occurs in a relatively weak part of the merged area and separates into two layers. The tear may occur in the PP layer of the sealant layers (FIG. 2 shows a tear in the PP layer), or it may occur between the EC layer and the PP layer.

In a non-limiting example, if the sealing portion is torn from the PP layers that face each other, T1 / T2 may be, for example, 1 (e.g., T1=80 pm, T2=80 pm), and if the tear is at either of the EC and PP layer boundaries, T1 / T2 may be, for example, 0.45 (e.g., T1=50 pm, T2=110 pm).

This tear ratio (T1 / T2) or tear thickness difference (T2-T1) can change the layer that cracks when torn if factors such as the thickness ratio of the polypropylene (PP) layer in the sealant layer (or the thickness ratio of the EC layer and the PP layer comprising the sealant layer), the yield strength of the sealant layer, or the glass transition temperature (Tg) are changed during manufacturing of the sealant layer. Using this, if a polypropylene (PP) layer or preferably a cast polypropylene (CPP) film is introduced in the sealant layer, it is possible to adjust it to satisfy the aforementioned [Formula 1] and [Formula 2] by increasing the yield strength or increasing the glass transition temperature (Tg).

More specifically, in the comparative examples described below, the yield strength and Tg value are relatively small, resulting in tearing near the polypropylene (PP) layer and weak sealing strength, whereas in the working examples, the yield strength and Tg value are relatively high, resulting in tearing at the boundary of the EC layer and the polypropylene (PP) layer and increased sealing strength as the strength of the polypropylene (PP) layer is strengthened when sealing.

The thickness ratio of the polypropylene (PP) layer in the sealant layer can be achieved by selecting the thickness of the polypropylene (PP) layer itself and by controlling the thickness of the extrusion layer (EC) during extrusion of the extruded resin.

The yield strength and glass transition temperature can also be easily adjusted by one of ordinary skill in the art. As is known in the art, the type of sealant layer polypropylene (PP) resin, its properties such as softness, and the content of elastomeric additives used in the sealant layer can determine the ultimate strength and glass transition temperature. Therefore, the yield strength and glass transition temperature can be controlled by selecting polypropylene and elastomer additives of appropriate types and properties known in the art to have the desired yield strength and glass transition temperature.

In an exemplary embodiment, the T1 / T2 (tear thickness ratio) of [Formula 1] above may be 0.61 or more, 0.62 or more, 0.63 or more, 0.64 or more, 0.65 or more, 0.66 or more, 0.,67 or more, 0.68 or more, 0.69 or more, 0. 70 or more, 0.71 or more, 0.72 or more, 0.73 or more, 0.74 or more, 0.75 or more, 0.76 or more, 0.,77 or more, 0.78 or more, 0.79 or more, 0.80 or more, 0.81 or more, 0.82 or more, 0.83 or more, or 0.84 or more. Or it may be 0.84 or less, 0.83 or less, 0.82 or less, 0.81 or less, 0.80 or less, 0.79 or less, 0.78 or less, 0.77 or less, 0.76 or less, 0.75 or less, 0.74 or less, 0.73 or less, 0.72 or less, 0.71 or less, 0.70 or less, 0.69 or less, 0.68 or less, 0.67 or less, 0.66 or less, 0.65 or less, 0.64 or less, 0.63 or less, 0.62 or less, or 0.61 or less.

In an exemplary embodiment, T2 - T1 of Formula 1 may be 35 pm or more, 40 pm or more, 45 pm or more, 50 pm or more, 55 pm or more, 60 pm or more, 65 pm or more, 70 pm or more, 75 pm or more, or 80 pm or more. Alternatively, it may be 80 pm or less, 75 pm or less, 70 pm or less, 65 pm or less, 60 pm or less, 55 pm or less, 50 pm or less, 45 pm or less, 40 pm or less, or 35 pm or less.

If the T1 / T2 (tear thickness ratio) and/or T2 - T1 (tear thickness difference) are outside the aforementioned range, the ambient temperature and high temperature sealing strength characteristics may be degraded, and the ambient temperature and high temperature sealing strength maintenance characteristics may be degraded, as can be seen from the data described below.

In an exemplary embodiment, the thickness ratio of the polypropylene (PP) layer of the sealant layer may be 0.500 or more, 0.525 or more, 0.550 or more, 0.575 or more, 0.600 or more, 0.625 or more, 0.650 or more, 0.675 or more, 0.700 or more, 0.725 or more, 0.750 or more, or 0.775 or more. Alternatively, it may be 0.800 or less, 0.775 or less, 0.750 or less, 0.725 or less, 0.700 or less, 0.675 or less, 0.650 or less, 0.625 or less, 0.600 or less, 0.575 or less, 0.550 or less, or 0.525 or less.

If the thickness ratio is less than 0.5, i.e., if the thickness of the polypropylene (PP) layer is thinned to less than half the thickness of the sealant layer, the yield strength may be lowered and the tear thickness ratio or tear thickness difference may fall outside the desired range, resulting in lower sealing strength. On the other hand, if the above thickness ratio is greater than 0.8, that is, if the thickness of the polypropylene (PP) layer is thickened to exceed 80% of the total thickness of the sealant layer, the tear thickness ratio or tear thickness difference may also fall outside the desired range and the sealing strength may be lowered.

Here, a thickness ratio of the polypropylene (PP) layer to the sealant layer of 0.500 or more means that the thickness of the extrusion (EC) layer must be less than the thickness of the polypropylene (PP) layer.

In an exemplary embodiment, the upper yield strength (N/mm$^2$) in the MD direction of the sealant layer may be within the range of 17.50 to 19.99, and may also have a numerical range between the following numerical values that are within that range. If the upper yield strength (N/mm$^2$) in the MD direction of the sealant layer falls outside the above range, the tear thickness ratio or tear thickness difference may fall outside the desired range, as can be seen from the data described below, resulting in poor ambient temperature and high temperature sealing strength properties, particularly high temperature sealing strength maintenance properties.

In a non-limiting example, the upper yield strength (N/mm$^2$) in the MD direction of the sealant layer is 17.50 or more, 17.51 or more, 17.52 or more, 17.53 or more, 17.54 or more, 17.55 or more, 17.56 or more, 17.57 or more, 17.58 or more, 17.59 or more, 17.60 or more, 17.61 or more, 17.62 or more, 17.63 or more or less, 17.64 or more or less, 17.65 or more or less, 17.66 or more or less, 17.67 or more or less, 17.68 or more or less, 17.69 or more or less, 17.70 or more or less, 17.71 or more or less, 17.72 or more or less, 17.73 or more or less, 17.74 or more or less, 17.75 or more or less, 17.76 or more or less, 17.77 or more or less, 17.78 or more or less, 17.79 or more or less, 17.80 or more or less, 17.81 or more or less, 17.82 or more or less, 17.83 or more or less, 17.84 or more or less, 17.85 or more or less, 17.86 or more or less, 17.87 or more or less, 17.88 or more or less, 17.89 or more or less, 17.90 or more or less, 17.91 or more or less, 17.92 or more or less, 17.93 or more or less, 17.94 or more or less, 17.95 or more or less, 17.96 or more or less, 17.97 or more or less, 17.98 or more or less, 17.99 or more or less, 18.00 or more or less, 18.01 or more or less, 18.02 or more or less, 18.03 or more or less, 18.04 or more or less, 18.05 or more or less, 18.06 or more or less, 18.07 or more or less, 18.08 or more or less, 18.09 or more or less, 18.10 or more or less, 18.11 or more or less, 18.12 or more or less, 18.13 or more or less, 18.14 or more or less, 18.15 or more or less, 18.16 or more or less, 18.17 or more or less, 18.18 or more or less, 18.19 or more or less, 18.20 or more or less, 18.21 or more or less, 18.22 or more or less, 18.23 or more or less, 18.24 or more or less, 18.25 or more or less, 18.26 or more or less, 18.27 or more or less, 18.28 or more or less, 18.29 or more or less, 18.30 or more or less, 18.31 or more or less, 18.32 or more or less, 18.33 or more or less, 18.34 or more or less, 18.35 or more or less, 18.36 or more or less, 18.37 or more or less, 18.38 or more or less, 18.39 or more or less, 18.40 or more or less, 18.41 or more or less, 18.42 or more or less, 18.43 or more or less, 18.44 or more or less, 18.45 or more or less, 18.46 or more or less, 18.47 or more or less, 18.48 or more or less, 18.49 or more or less, 18.50 or more or less, 18.51 or more or less, 18.52 or more or less, 18.53 or more or less, 18.54 or more or less, 18.55 or more or less, 18.56 or more or less, 18.57 or more or less, 18.58 or more or less, 18.59 or more or less, 18.60 or more or less, 18.61 or more or less, 18.62 or more or less, 18.63 or more or less, 18.64 or more or less, 18.65 or more or less, 18.66 or more or less, 18.67 or more or less, 18.68 or more or less, 18.69 or more or less, 18.70 or more or less, 18.71 or more or less, 18.72 or more or less, 18.73 or more or less, 18.74 or more, 18.75 or more, 18.76 or more, 18.77 or more, 18.78 or more, 18.78 or less, 18.79 or more, 18.79 or less, 18.80 or more, 18.80 or less, 18.81 or more, 18.81 or less, 18.82 or more, 18.82 or less, 18.83 or more, 18.83 or less, 18.84 or more, 18.84 or less, 18.85 or more, 18.85 or less, 18.86 or more, 18.86 or less, 18.87 or more, 18.87 or less, 18.88 or more, 18.89 or more or less, 18.90 or more or less, 18.91 or more or less, 18.92 or more or less, 18.93 or more or less, 18.94 or more or less, 18.95 or more or less, 18.96 or more or less, 18.97 or more or less, 18.98 or more or less, 18.99 or more or less, 19.00 or more or less, 19.01 or more or less, 19.02 or more or less, 19.03 or more or less, 19.04 or more or less, 19.05 or more, 19.06 or more, 19.07 or more, 19.08 or more, 19.09 or more, 19.10 or more, 19.11 or more, 19.12 or more, 19.13 or more, 19.14 or more, 19.15 or more, 19.16 or more, 19.17 or more, 19.18 or more, 19.19 or more, 19.20 or more, 19.21 or less, 19.22 or less, 19.23 or less, 19.24 or less, 19.25 or less, 19.26 or less, 19.27 or less, 19.28 or less, 19.29 or less, 19.30 or less, 19.31 or less, 19.32 or less, 19.33 or less, 19.34 or less, 19.35 or less, 19.36 or less, 19.37 or less, 19.38 or less, 19.39 or less, 19.40 or less, 19.41 or less, 19.42 or less, 19.43 or less, 19.44 or less, 19.45 or less, 19.46 or less, 19.47 or less, 19.48 or less, 19.49 or less, 19.50 or less, 19.51 or less, 19.52 or less, 19.53 or more or less, 19.54 or more or less, 19.55 or more or less, 19.56 or more or less, 19.57 or more or less, 19.58 or more or less, 19.59 or more or less, 19.60 or more or less, 19.61 or more or less, 19.62 or more or less, 19.63 or more or less, 19.64 or more or less, 19.65 or more or less, 19.66 or more or less, 19.67 or more or less, 19.68 or more or less, 19.69 or more or less, 19.70 or more or less, 19.71 or more or less, 19.72 or more or less, 19.73 or more or less, 19.74 or more or less, 19.75 or more or less, 19.76 or more or less, 19.77 or more or less, 19.78 or more or less, 19.79 or more or less, 19.80 or more or less, 19.81 or more or less, 19.82 or more or less, 19.83 or more or less, 19.84 or more or less, 19.85 or more or less, 19.86 or more or less, 19.87 or more or less, 19.88 or more or less, 19.89 or more or less, 19.90 or more or less, 19.91 or more or less, 19.92 or more or less, 19.93 or more or less, 19.94 or more or less, 19.95 or more or less, 19.96 or more or less, 19.97 or more or less, 19.98 or more or less, or 19.99 or less.

In an exemplary embodiment, the upper yield strength (N/mm$^2$) in the TD direction of the sealant layer may be within the range of 17.00 to 19.99, and may have a numerical range between the following numerical values existing within the range. If the upper yield strength (N/mm$^2$) in the TD direction of the sealant layer is outside the above range, the tear thickness ratio or tear thickness difference may be outside the desired range, resulting in poor ambient temperature and high temperature sealing strength characteristics, especially high temperature sealing strength maintenance characteristics, as can be seen from the following data.

In a non-limiting example, the sealant layer has a yield strength (N/mm$^2$) in the TD direction of 17.00 or more, 17.01 or more or less, 17.02 or more or less, 17.03 or more or less, 17.04 or more or less, 17.05 or more or less, 17.06 or more or less, 17.07 or more or less, 17.08 or more or less, 17.09 or more or less, 17.10 or more or less, 17.11 or more or less, 17.12 or more or less, 17.13 or more or less, 17.14 or more or less, 17.15 or more or less, 17.16 or more, 17.17 or more, 17.18 or more, 17.19 or more, 17.20 or more, 17.21 or more, 17.22 or more, 17.23 or more, 17.24 or more, 17.25 or more, 17.26 or more, 17.27 or more, 17.28 or more, 17.29 or more, 17.30 or more, 17.31 or more, 17.32 or more, 17.33 or more, 17.34 or more, 17.35 or more, 17.36 or more, 17.37 or more, 17.38 or more, 17.39 or more, 17.40 or more, 17.41 or more, 17.42 or more, 17.43 or more or less, 17.44 or more or less, 17.45 or more or less, 17.46 or more or less, 17.47 or more or less, 17.48 or more or less, 17.49 or more or less, 17.50 or more or less, 17.51 or more or less, 17.52 or more or less, 17.53 or more or less, 17.54 or more or less, 17.55 or more or less, 17.56 or more or less, 17.57 or more or less, 17.58 or more or less, 17.59 or more or less, 17.60 or more or less, 17.61 or more or less, 17.62 or more or less, 17.63 or more or less, 17.64 or more or less, 17.65 or more or less, 17.66 or more or less, 17.67 or more or less, 17.68 or more or less, 17.69 or more or less, 17.70 or more or less, 17.71 or more or less, 17.72 or more or less, 17.73 or more or less, 17.74 or more or less, 17.75 or more or less, 17.76 or more or less, 17.77 or more or less, 17.78 or more or less, 17.79 or more or less, 17.80 or more or less, 17.81 or more or less, 17.82 or more or less, 17.83 or more or less, 17.84 or more or less, 17.85 or more or less, 17.86 or more or less, 17.87 or more or less, 17.88 or more or less, 17.89 or more or less, 17.90 or more or less, 17.91 or more or less, 17.92 or more or less, 17.93 or more or less, 17.94 or more or less, 17.95 or more or less, 17.96 or more or less, 17.97 or more or less, 17.98 or more or less, 17.99 or more or less, 18.00 or more or less, 18.01 or more or less, 18.02 or more or less, 18.03 or more or less, 18.04 or more or less, 18.05 or more or less, 18.06 or more or less, 18.07 or more or less, 18.08 or more or less, 18.09 or more or less, 18.10 or more or less, 18.11 or more or less, 18.12 or more or less, 18.13 or more or less, 18.14 or more or less, 18.15 or more or less, 18.16 or more or less, 18.17 or more or less, 18.18 or more or less, 18.19 or more or less, 18.20 or more or less, 18.21 or more or less, 18.22 or more or less, 18.23 or more or less, 18.24 or more or less, 18.25 or more or less, 18.26 or more or less, 18.27 or more or less, 18.28 or more or less, 18.29 or more or less, 18.30 or more or less, 18.31 or more or less, 18.32 or more or less, 18.33 or more or less, 18.34 or more or less, 18.35 or more or less, 18.36 or more or less, 18.37 or more or less, 18.38 or more or less, 18.39 or more or less, 18.40 or more or less, 18.41 or more or less, 18.42 or more or less, 18.43 or more or less, 18.44 or more or less, 18.45 or more or less, 18.46 or more or less, 18.47 or more or less, 18.48 or more or less, 18.49 or more or less, 18.50 or more or less, 18.51 or more or less, 18.52 or more or less, 18.53 or more or less, 18.54 or more or less, 18.55 or more or less, 18.56 or more or less, 18.57 or more or less, 18.58 or more or less, 18.59 or more or less, 18.60 or more or less, 18.61 or more or less, 18.62 or more or less, 18.63 or more or less, 18.64 or more or less, 18.65 or more or less, 18.66 or more or less, 18.67 or more or less, 18.68 or more or less, 18.69 or more or less, 18.70 or more or less, 18.71 or more or less, 18.72 or more or less, 18.73 or more or less, 18.74 or more or less, 18.75 or more or less, 18.76 or more or less, 18.77 or more or less, 18.78 or more or less, 18.79 or more or less, 18.80 or more or less, 18.81 or more or less, 18.82 or more or less, 18.83 or more or less, 18.84 or more or less, 18.85 or more or less, 18.86 or more or less, 18.87 or more or less, 18.88 or more or less, 18.89 or more or less, 18.90 or more or less, 18.91 or more or less, 18.92 or more or less, 18.93 or more or less, 18.94 or more or less, 18.95 or more or less, 18.96 or more or less, 18.97 or more or less, 18.98 or more or less, 18.99 or more or less, 19.00 or more or less, 19.01 or more or less, 19.02 or more or less, 19.03 or more or less, 19.04 or more or less, 19.05 or more or less, 19.06 or more or less, 19.07 or more or less, 19.08 or more or less, 19.09 or more or less, 19.10 or more or less, 19.11 or more or less, 19.12 or more or less, 19.13 or more or less, 19.14 or more or less, 19.15 or less, 19.16 or less, 19.17 or less, 19.18 or less, 19.19 or less, 19.20 or less, 19.21 or less, 19.22 or less, 19.23 or less, 19.24 or less, 19.25 or more, 19.26 or more, 19.27 or more, 19.28 or more, 19.29 or more, 19.30 or more, 19.31 or more, 19.32 or more, 19.33 or more, 19.34 or more or less, 19.35 or more or less, 19.36 or more or less, 19.37 or more or less, 19.38 or more or less, 19.39 or more or less, 19.40 or more or less, 19.41 or more or less, 19.42 or more or less, 19.43 or more or less, 19.44 or more or less, 19.45 or more or less, 19.46 or more or less, 19.47 or more or less, 19.48 or more or less, 19.49 or more or less, 19.50 or more or less, 19.51 or more or less, 19.52 or more or less, 19.53 or more or less, 19.54 or more or less, 19.55 or more or less, 19.56 or more or less, 19.57 or more or less, 19.58 or more or less, 19.59 or more or less, 19.60 or more or less, 19.61 or more or less, 19.62 or more or less, 19.63 or more or less, 19.64 or more or less, 19.65 or more or less, 19.66 or more or less, 19.67 or more or less, 19.68 or more or less, 19.69 or more or less, 19.70 or more or less, 19.71 or more or less, 19.72 or more or less, 19.73 or more or less, 19.74 or more or less, 19.75 or more or less, 19.76 or more or less, 19.77 or more or less, 19.78 or more or less, 19.79 or more or less, 19.80 or more or less, 19.81 or more or less, 19.82 or more or less, 19.83 or more or less, 19.84 or more or less, 19.85 or more or less, 19.86 or more or less, 19.87 or more or less, 19.88 or more or less, 19.89 or more or less, 19.90 or more or less, 19.91 or more or less, 19.92 or more or less, 19.93 or more or less, 19.94 or more or less, 19.95 or more or less, 19.96 or more or less, 19.97 or more or less, 19.98 or more or less, or 19.99 or less.

In an exemplary embodiment, the sum of the upper yield strength ($N/mm^2$) in the MD direction and the upper yield strength ($N/mm^2$) in the TD direction of the sealant layer is at least 34.5 and no more than 39.9, preferably at least 34.5 and no more than 39, more preferably 34.61 to 38.85.

In an exemplary embodiment, the ultimate strength ($N/mm^2$) in the MD direction of the sealant layer may be greater than the ultimate strength ($N/mm^2$) in the TD direction. Due to the nature of the extrusion coating (EC) process and the nature of the lamination process using a PP layer for the sealant layer, slight elongation may occur in the MD direction (Machine Direction). Therefore, it is thought that the yield strength in the MD direction is greater than in the TD direction (Transverse Direction), where no stretching occurs.

In an exemplary embodiment, the glass transition temperature (Tg) of the sealant layer has a value within the range of -20°C to -10°C, preferably -19°C to -11°C, and may have a numerical range between the following numerical values existing within that range. If the glass transition temperature (Tg) of the sealant layer is outside the above range of -20°C to - 10°C, the tear thickness ratio or tear thickness difference may be outside the desired range, resulting in poor sealing strength characteristics, especially high temperature sealing strength characteristics, especially high temperature sealing strength maintenance characteristics, as can be seen from the following data.

In a non-limiting example, the glass transition temperature (Tg) of the sealant layer is -20°C or more, -19.5°C or more, -19°C or more, -18.5°C or more, -18°C or more, -17.5°C or more, -17°C or more, -16.5°C or more, - 16°C or more, -15.5°C or more, -15°C or more, -14.5°C or more, -14°C or more, -13.5°C or more, -13°C or more, -12.5°C or more, -12°C or more, -11.5°C or more, -11°C or more, or -10.5°C or more. Alternatively, it may be -10°C or less, -10.5°C or less, -11°C or less, -11.5°C or less, -12°C or less, -12.5°C or less, -13°C or less, -13.5°C or less, -14°C or less, -14.5°C or less, -15°C or less, -15.5°C or less, -16°C or less, -16.5°C or less, -17°C or less, -17.5°C or less, -18°C or less, -18.5°C or less.

In an exemplary embodiment, the secondary battery pouch film may have a maximum sealing strength (in units of N/15mm) measured at ambient temperature when sealed under 220°C sealing conditions as measured by the method below of at least 150 N/15mm and no more than 205 N/15mm in the TD direction.

In a non-limiting example, the ambient temperature measured value of the maximum sealing strength when sealed under the above 220°C sealing conditions may be 150 N/15mm or more, 155 N/15mm or more, 160 N/15mm or more, 165 N/15mm or more, 170 N/15mm or more, 175 N/15mm or more, 180 N/15mm or more, 185 N/15mm or more, 190 N/15mm or more, 195 N/15mm or more, 200 N/15mm or more in the TD direction.

In an exemplary embodiment, the secondary battery pouch film has a high temperature measured value (measured after 3 minutes at 60°C) of a maximum sealing strength (unit N/15mm) when sealed under 220°C sealing conditions as measured by the method below, which is no less than 115 N/15mm and no more than 170 N/15mm in the TD direction.

In a non-limiting example, the high temperature measured value of the maximum sealing strength when sealed under the above 220°C sealing conditions (measured after 3 minutes at 60°C) may be 115 N/15 mm or more, 120 N/15 mm or more, 125 N/15 mm or more, 130 N/15 mm or more, 135 N/15 mm or more, 140 N/15 mm or more, 145 N/15 mm or more, 150 N/15 mm or more, 155 N/15 mm or more, 160 N/15 mm or more, 165 N/15 mm or more in the TD direction.

**[Measurement method of maximum sealing strength when sealed under 220°C sealing conditions]**

Specimen is prepared by fabricating a 100mm X 200mm secondary battery pouch film, folding it in half, sealing it, and cutting it into 15mm wide pieces perpendicular to the sealing direction.

Sealing conditions are seal bar width 200mm x seal thickness 10mm, sealing time 2.0s, 0.2MPa, temperature 220°C.

The respective sealing strength (load) by pulling the specimen in the MD and/or TD directions is measured with a sealing strength tester (e.g., SHIMADZU's AGS-X model UTM equipment), but the measurement conditions are 10 mpm test speed and 30 mm grip gap.

In the case of ambient temperature measurement, it is measured at ambient temperature, and in the case of high temperature measurement, it is measured after being left for 3 minutes under 60°C conditions. When measuring the sealing strength while pulling the sealing part, the maximum strength is indicated as the maximum sealing strength.

In an exemplary embodiment, the secondary battery pouch film has a ambient temperature energy measured by the method below of 2.0 to 3.0 KN x mm.

In an exemplary embodiment, the secondary battery pouch film has a high temperature energy measured by the method below of 1.5 to 2.5 KN x mm.

In an exemplary embodiment, the difference between the ambient temperature energy and the high temperature energy measured by the method below of the secondary battery pouch film is 0.4 to 0.6 KN x mm.

**[Measurement of ambient temperature energy and high temperature energy]**

It is measured according to the sealing strength measurement method described above, and the ambient temperature energy or high temperature energy is the area between the sealing strength graph and the stroke X-axis (i.e., the integral value between the sealing strength graph and the X-axis) at ambient temperature or high temperature (high temperature is measured after being left at 60°C for 3 minutes) with the X-axis as the stroke (distance) pulling the sealing part and the Y-axis as the sealing strength, and the stroke range for the integration is from 0mm to 20mm.

In an exemplary embodiment, the secondary battery pouch film has a ambient temperature maximum stroke of 15 to 25 mm as measured by the method below.

In an exemplary embodiment, the secondary battery pouch film has a high temperature maximum stroke of 18 to 24 mm as measured by the method below.

**[Measuring ambient temperature maximum stroke and high temperature maximum stroke]**

It is measured according to the sealing strength measurement method described above, and at ambient temperature or high temperature (high temperature is measured after 3 minutes at 60°C), the X axis is the stroke (distance) pulling the sealing part, and the Y axis is the sealing strength, and the stroke (distance) at which the sealing strength increases as the stroke increases and the sealing strength value is maximized is evaluated as the maximum stroke. If evaluated at ambient temperature, it is the ambient temperature maximum stroke, and if evaluated at high temperature, it is the high temperature maximum stroke.

In an exemplary embodiment, the outer layer may comprise nylon, polyethylene terephthalate (PET), polybutylene terephthalate (PBT), a blend of nylon and PET (a laminated film of nylon and PET), or the like.

In an exemplary embodiment, the nylon film of the outer layer is preferably at least 20 pm thick and more preferably at least 25 pm thick in terms of moldability, but the breakdown voltage may drop if the nylon film thickness exceeds 30 pm. Therefore, a preferred nylon film thickness may be 20 pm to 30 pm, preferably 25 pm to 30 pm.

In an exemplary embodiment, a thinner thickness of the PET film and a thicker thickness of the nylon film among the outer layers is advantageous for moldability. However, a thinner PET film thickness may be disadvantageous in terms of dielectric breakdown voltage, so from this point of view, the PET film is preferably 7 pm to 12 pm.

In an exemplary embodiment, the metal layer may comprise a metal such as aluminum, SUS, copper, or the like.

In an exemplary embodiment, the sealant layer or the chloropolypropylene (CPP) film may contain various additives (rubber, elastomer, slip agent, etc.) depending on the requirements.

In an exemplary embodiment, the total thickness of the secondary battery pouch film may be, for example, from 60 to 185 pm. In an exemplary embodiment, the secondary battery pouch film may be greater than or equal to 153 pm or less than or equal to 113 pm.

In an exemplary embodiment, the metal layer thickness may be, for example, 20-80 pm, preferably 40-60 pm or 60-80 pm.

In an exemplary embodiment, the sealant layer thickness may be, for example, 20-80 pm.

In an exemplary embodiment, the thickness of the cast polypropylene (CPP) layer of the sealant layer may be, for example, 20-80 pm.

In an exemplary embodiment, the thickness of the extruded polypropylene (PP) layer, which is the extrusion (EC) layer of the sealant layer, may be, for example, 0 to 60 pm.

Exemplary embodiments of the present disclosure provide a secondary battery encased in the aforementioned secondary battery pouch film. Such a secondary battery may be, for example, a lithium secondary battery, and in particular, a medium to large secondary battery for an electric vehicle (EV) or energy storage system (ESS).

In addition, exemplary embodiments of the present disclosure provide a method for manufacturing a secondary battery including encasing the secondary battery in the secondary battery pouch film described above.

Exemplary embodiments of the present disclosure are described in more detail in the following examples. The embodiments disclosed herein are illustrated for purposes of illustration only, and embodiments of the present disclosure may be practiced in various forms and the scope of the present disclosure should not be construed as being limited to the embodiments described herein.

**[Examples and Comparative Examples]**

In the Examples and Comparative Examples, the outer layer is composed of a composite layer of nylon (25 pm) and PET (12 pm), and the metal layer is aluminum foil (60 pm), but the thickness of the extruded layer of the sealant layer and the polypropylene (CPP, unstretched polypropylene) layer is adjusted as shown in Table 1 below, and those with a yield strength and Tg values shown in the following table are used. In addition, each yield strength, Tg, and sealing strength were evaluated by the method below. The total thickness is 183 pm.

**<Yield strength>**

Specimen is prepared by delaminating the sealant layer of the pouch film and making it have a width of 15 mm and length of 100 mm.

The yield strength is measured using the AGS-X model UTM equipment from SHIMADZU, under conditions of a test speed of 50 mph and a grip gap of 30 mm.

A specimen stretches proportionally to the increase in load, but when it exceeds its elastic limit, it begins to stretch out of proportion to the load, and this is called the yield point. In the case of CPP, there is no lower yield point, so the yield point is the upper yield point.

**<Tg measurement method>**

DSC250 equipment from TA corp. is utilized. The measurement conditions are: measuring up to the temperature of -50°C, and a heating rate of 10°C, and a cooling rate of -20°C. Tg value is calculated through the analysis program (TRIOS) at -50°C, which is an approximate Tg value range of PP.

**<Tear test method >**

A secondary battery pouch film is folded in half, with the sealant layer facing each other, and sealed at 200°C for 1.6 seconds. After sealing, the sample size is 20cm wide by 5cm long, and the sample is cut into 1.5cm long strips.

Both ends of the sample are grasped with the universal testing machine (UTM) and pulled (the pulling condition is 5 mm/min). After pulling to tear at least about 5 mm from the sealing part of the pouch film, the thickness (T1; unit pm) of the side (upper side) where the thickness of the tear is relatively thin or the same, and the thickness (T2; unit pm) of the side (lower side) where the thickness of the tear is relatively thick or the same is measured, respectively, using a thickness gauge.

Tearing is performed on a total of 10 samples (N=1-10) for each example and comparative example.

Tables 1 through 3 below show the tear thickness ratio (T1 / T2) and tear thickness difference (T2-T1) for each working example and comparative example, respectively.

Each of the 10 samples in Example 1 (1-1 to 1-10) has the same thickness ratio of the PP layer in the sealant layer, the same yield strength, and the same glass transition temperature, but the tear properties are somewhat different because the heat is not applied uniformly during sealing. The same is true for the 10 samples of Comparative Example 1 (1-1 to 1-10) and the 10 samples of Comparative Example 2 (2-1 to 2-10).

[Table 1]

| | | Sealant layer | | CPP layer (film) /Sealant layer Thickness ratio | Direction | Yield Strength | MD yield strength + TD yield strength | Sealant layer Tg value |
|---|---|---|---|---|---|---|---|---|
| | Sealant layer thickness | Extruded layer | CPP layer (film) | | | | | |
| Example 1 | 80 | 30 | 50 | 0.625 | MD | 19.22 | 36.53 | -13.41°C |
| | | | | | TD | 17.31 | | |
| Comparative Example 1 | 80 | 80 | 0 | 0 | MD | 17.03 | 33.76 | -22.64°C |
| | | | | | TD | 16.73 | | |
| Comparative Example 2 | 80 | 30 | 50 | 0.625 | MD | 21.91 | 42.1 | -8.68°C |
| | | | | | TD | 20.19 | | |

[Table 2]

| Example 1 | T1 (Thickness of the thin side, $\mu$m) | T2 (Thickness of the thick side, um) | T1/T2 | T2-T1($\mu$m) |
|---|---|---|---|---|
| N=1 (Example 1-1) | 124 | 206 | 0.60 | 82 |
| N=2 (Example 1-2) | 136 | 195 | 0.70 | 59 |
| N=3 (Example 1-3) | 146 | 176 | 0.83 | 30 |
| N=4 (Example 1-4) | 133 | 194 | 0.69 | 61 |
| N=5 (Example 1-5) | 135 | 193 | 0.70 | 58 |
| N=6 (Example 1-6) | 128 | 199 | 0.64 | 71 |
| N=7 (Example 1-7) | 139 | 191 | 0.73 | 52 |
| N=8 (Example 1-8) | 127 | 202 | 0.63 | 75 |
| N=9 (Example 1-9) | 131 | 195 | 0.67 | 64 |

(continued)

| Example 1 | T1 (Thickness of the thin side, μm) | T2 (Thickness of the thick side, um) | T1/T2 | T2-T1(μm) |
|---|---|---|---|---|
| N=10 (Example 1-10) | 131 | 196 | 0.67 | 65 |

[Table 3]

| Comparative example 1 | T1 (Thickness of the thin side, μm) | T2 (Thickness of the thick side, um) | T1/T2 | T2-T1 (μm) |
|---|---|---|---|---|
| N=1 (Comparative example 1-1) | 96 | 235 | 0.41 | 139 |
| N=2 (Comparative example 1-2) | 95 | 229 | 0.41 | 134 |
| N=3 (Comparative example 1-3) | 100 | 228 | 0.44 | 128 |
| N=4 (Comparative example 1-4) | 95 | 232 | 0.41 | 137 |
| N=5 (Comparative example 1-5) | 94 | 238 | 0.39 | 144 |
| N=6 (Comparative example 1-6) | 98 | 229 | 0.43 | 131 |
| N=7 (Comparative example 1-7) | 98 | 226 | 0.43 | 128 |
| N=8 (Comparative example 1-8) | 100 | 230 | 0.43 | 130 |
| N=9 (Comparative example 1-9) | 99 | 231 | 0.43 | 132 |
| N=10 (Comparative example 1-10) | 97 | 231 | 0.42 | 134 |

[Table 4]

| Comparative example 2 | T1 (Thickness of the thin side, μm) | T2 (Thickness of the thick side, um) | T1/T2 | T2-T1 (μm) |
|---|---|---|---|---|
| N=1 (Comparative example 2-1) | 102 | 221 | 0.46 | 119 |
| N=2 (Comparative example 2-2) | 110 | 217 | 0.51 | 107 |
| N=3 (Comparative example 2-3) | 116 | 210 | 0.55 | 94 |
| N=4 (Comparative example 2-4) | 111 | 214 | 0.52 | 103 |
| N=5 (Comparative example 2-5) | 112 | 214 | 0.52 | 102 |
| N=6 (Comparative example 2-6) | 109 | 220 | 0.50 | 111 |
| N=7 (Comparative example 2-7) | 107 | 218 | 0.49 | 111 |

(continued)

| Comparative example 2 | T1 (Thickness of the thin side, μm) | T2 (Thickness of the thick side, um) | T1/T2 | T2-T1 (μm) |
|---|---|---|---|---|
| N=8 (Comparative example 2-8) | 114 | 210 | 0.54 | 96 |
| N=9 (Comparative example 2-9) | 115 | 211 | 0.55 | 96 |
| N=10 (Comparative example 2-10) | 105 | 223 | 0.47 | 118 |

**<Measurement of maximum sealing strength when sealed under 220°C sealing conditions>**

For the pouch film in the working examples and comparative examples, the specimen is prepared by fabricating a 100mm X 200mm pouch film, folding it in half, sealing it, and cutting it into 15mm wide sections perpendicular to the sealing direction.

Sealing conditions are 200mm width of seal bar x 10mm thickness of seal, 2.0 seconds, 0.2MPa, and temperature of 220°C.

Each sealing strength (load) is measured with a sealing strength tester (e.g., AGS-X model UTM equipment from SHIMADZU) by pulling the specimen in the TD direction, and the measurement conditions are 10 mpm test speed and 30 mm grip gap.

In the case of ambient temperature measurement, it is measured at ambient temperature, and in the case of high temperature measurement, it is measured after being left for 3 minutes at 60°C.

The maximum of the sealing strength measurements is the maximum sealing strength, i.e., when the sealing strength is measured while pulling on the sealing area, the maximum strength is indicated as the maximum sealing strength.

Tables 4 through 6 below show the ambient temperature and high temperature maximum sealing strengths of each example and comparative example, as well as the degree of degradation of the maximum sealing strength between high temperature and ambient temperature.

[Table 5]

| Example 1 | TD direction ambient temperature maximum sealing strength (N) | TD direction high temperature maximum sealing strength (N) | Sealing strength degradation (%) 100-[(TD direction ambient temperature maximum sealing strength - TD direction high temperature maximum sealing strength) /(TD direction ambient temperature maximum sealing strength)x100] |
|---|---|---|---|
| N=1 (Example 1-1) | 155 | 130 | 83.87 |
| N=2 (Example 1-2) | 140 | 126 | 90..00 |
| N=3 (Example 1-3) | 148 | 127 | 85.81 |
| N=4 (Example 1-4) | 142 | 120 | 84.51 |
| N=5 (Example 1-5) | 140 | 127 | 90.71 |

(continued)

| Example 1 | TD direction ambient temperature maximum sealing strength (N) | TD direction high temperature maximum sealing strength (N) | Sealing strength degradation (%) 100-[(TD direction ambient temperature maximum sealing strength - TD direction high temperature maximum sealing strength) /(TD direction ambient temperature maximum sealing strength)x100] |
|---|---|---|---|
| N=6 (Example 1-6) | 145 | 125 | 86.21 |
| N=7 (Example 1-7) | 141 | 122 | 86.52 |
| N=8 (Example 1-8) | 140 | 123 | 87.86 |
| N=9 (Example 1-9) | 149 | 128 | 85.91 |
| N=10 (Example 1-10) | 144 | 126 | 87.50 |

[Table 6]

| Comparative example 1 | TD direction ambient temperature maximum sealing strength (N) | TD direction high temperature maximum sealing strength (N) | Sealing strength degradation (%) 100-[(TD direction ambient temperature maximum sealing strength - TD direction high temperature maximum sealing strength)/(TD direction ambient temperature maximum sealing strength)x100] |
|---|---|---|---|
| N=1 (Comparative example 1-1) | 85 | 40 | 47.06 |
| N=2 (Comparative example 1-2) | 80 | 41 | 51.25 |
| N=3 (Comparative example 1-3) | 77 | 44 | 57.14 |
| N=4 (Comparative example 1-4) | 82 | 40 | 48.78 |
| N=5 (Comparative example 1-5) | 80 | 46 | 57.50 |
| N=6 (Comparative example 1-6) | 79 | 42 | 53.16 |
| N=7 (Comparative example 1-7) | 83 | 41 | 49.40 |

(continued)

| Comparative example 1 | TD direction ambient temperature maximum sealing strength (N) | TD direction high temperature maximum sealing strength (N) | Sealing strength degradation (%) 100-[(TD direction ambient temperature maximum sealing strength - TD direction high temperature maximum sealing strength)/(TD direction ambient temperature maximum sealing strength)x100] |
|---|---|---|---|
| N=8 (Comparative example 1-8) | 81 | 43 | 53.09 |
| N=9 (Comparative example 1-9) | 81 | 44 | 54.32 |
| N=10 (Comparative example 1-10) | 78 | 42 | 53.85 |

[Table 7]

| Comparative example 2 | TD direction ambient temperature maximum sealing strength (N) | TD direction high temperature maximum sealing strength (N) | Sealing strength degradation (%) 100-[(TD direction ambient temperature maximum sealing strength - TD direction high temperature maximum sealing strength)/(TD direction ambient temperature maximum sealing strength)×100] |
|---|---|---|---|
| N=1 (Comparative example 2-1) | 85 | 62 | 72.94 |
| N=2 (Comparative example 2-2) | 90 | 62 | 68.89 |
| N=3 (Comparative example 2-3) | 94 | 65 | 69.15 |
| N=4 (Comparative example 2-4) | 88 | 67 | 76.14 |
| N=5 (Comparative example 2-5) | 92 | 62 | 67.39 |
| N=6 (Comparative example 2-6) | 91 | 63 | 69.23 |
| N=7 (Comparative example 2-7) | 91 | 65 | 71.43 |
| N=8 (Comparative example 2-8) | 87 | 63 | 72.41 |
| N=9 (Comparative example 2-9) | 94 | 62 | 65.96 |

(continued)

| Comparative example 2 | TD direction ambient temperature maximum sealing strength (N) | TD direction high temperature maximum sealing strength (N) | Sealing strength degradation (%) 100-[(TD direction ambient temperature maximum sealing strength - TD direction high temperature maximum sealing strength)/(TD direction ambient temperature maximum sealing strength)×100] |
|---|---|---|---|
| N=10 (Comparative example 2-10) | 94 | 66 | 70.21 |

**<Measurement of ambient temperature energy, high temperature energy, and each ambient temperature maximum stroke and high temperature in the TD direction when sealed under 220°C sealing conditions>**

To examine the maintenance properties of the sealing strength in the TD direction, ambient temperature energy and high temperature energy are evaluated. For this purpose, the sealing strength is measured as described above in the case of sealing under 220°C sealing conditions, and at ambient temperature or high temperature (high temperature is measured after 3 minutes at 60°C), the X axis is the stroke (distance) pulling the sealing part in the TD direction, the Y axis is the sealing strength, and the area between the graph of the change in sealing strength according to the stroke and the X-axis representing the stroke (i.e., the integral value of the graph of the change in sealing strength according to the stroke) is defined as ambient temperature energy (energy in the case of measurement at ambient temperature) or high temperature energy (energy in the case of measurement after 3 minutes at 60°C), and the stroke range for the integration is from 0mm to 20mm.

Meanwhile, the ambient temperature maximum stroke and high temperature is measured to see the maintenance properties of the sealing strength in the TD direction.

In other words, it is measured as described above in the case of sealing under 220°C sealing conditions, and at ambient temperature or high temperature (high temperature is measured after 3 minutes at 60°C), with the X axis as the stroke (distance) pulling the sealing part in the TD direction and the Y axis as the sealing strength, and the stroke (distance) at which the sealing strength increases as the stroke increases and the sealing strength value is maximized was evaluated as the maximum stroke. If evaluated at ambient temperature, it is the ambient temperature maximum stroke, and if evaluated at high temperature, it is the high temperature maximum stroke.

As mentioned above, the maximum stroke and energy (the integral value between the stroke axis and the sealing strength graph) can be considered important factors for evaluating the sealing strength maintenance properties (reliability). In other words, even if the maximum sealing strength, which is the peak value, is large, the maximum sealing strength alone does not indicate the sealing strength maintenance properties, but depending on the maximum stroke, it can be seen how quickly the maximum sealing strength reaches the maximum value and then drops, and the area formed by the stroke and sealing strength curves (integral value) can be used to evaluate whether the sealing strength is well maintained, that is, reliable.

In the case of medium and large-sized batteries such as electric vehicles, there are many molded models in the MD direction, and the MD direction sealing properties are generally better than the TD direction sealing properties, so it is more important to measure whether the sealing strength is maintained in the TD direction (Pouch to Pouch sealing), which has relatively weak sealing properties, than in the MD direction (Tap to Pouch sealing). Therefore, the change in sealing strength due to the change in stroke in the TD direction was measured and is displayed below.

[Table 8]

| Example 1 | TD direction ambient temperature maximum stroke (mm) | TD direction high temperature maximum stroke (mm) | Ambient temperature energy | High temperature energy |
|---|---|---|---|---|
| N=1 (Example 1-1) | 22.7 | 20.6 | 3.52 | 2.68 |
| N=2 (Example 1-2) | 21.1 | 21.3 | 2.95 | 2.28 |

(continued)

| Example 1 | TD direction ambient temperature maximum stroke (mm) | TD direction high temperature maximum stroke (mm) | Ambient temperature energy | High temperature energy |
|---|---|---|---|---|
| N=3 (Example 1-3) | 19.8 | 21.1 | 2.93 | 2.68 |
| N=4 (Example 1-4) | 21.4 | 19.7 | 3.04 | 2.36 |
| N=5 (Example 1-5) | 20.2 | 19.5 | 2.83 | 2.48 |
| N=6 (Example 1-6) | 21.9 | 19.5 | 3.18 | 2.43 |
| N=7 (Example 1-7) | 22.1 | 20.8 | 3.12 | 2.53 |
| N=8 (Example 1-8) | 21.0 | 20.1 | 2.94 | 2.47 |
| N=9 (Example 1-9) | 22.4 | 19.8 | 3.34 | 2.53 |
| N=10 (Example 1-10) | 20.5 | 21.0 | 2.95 | 2.65 |

[Table 9]

| Comparative example 2 | TD direction ambient temperature maximum stroke (mm) | TD direction high temperature maximum stroke (mm) | Ambient temperature energy | High temperature energy |
|---|---|---|---|---|
| N=1 (Comparative example 2-1) | 15.4 | 13.8 | 1.31 | 0.55 |
| N=2 (Comparative example 2-2) | 15.1 | 13.5 | 1.21 | 0.55 |
| N=3 (Comparative example 2-3) | 14.7 | 13.2 | 1.13 | 0.58 |
| N=4 (Comparative example 2-4) | 15.2 | 14.0 | 1.25 | 0.56 |
| N=5 (Comparative example 2-5) | 16.1 | 14.1 | 1.29 | 0.65 |
| N=6 (Comparative example 2-6) | 15.3 | 13.3 | 1.21 | 0.56 |
| N=7 (Comparative example 2-7) | 14.9 | 14.3 | 1.24 | 0.59 |

(continued)

| Comparative example 2 | TD direction ambient temperature maximum stroke (mm) | TD direction high temperature maximum stroke (mm) | Ambient temperature energy | High temperature energy |
|---|---|---|---|---|
| N=8 (Comparative example 2-8) | 15.3 | 12.6 | 1.24 | 0.54 |
| N=9 (Comparative example 2-9) | 15.3 | 13.7 | 1.24 | 0.60 |
| N=10 (Comparative example 2-10) | 15.8 | 13.0 | 1.23 | 0.54 |

[Table 10]

| Comparative example 2 | TD direction ambient temperature maximum stroke (mm) | TD direction high temperature maximum stroke (mm) | Ambient temperature energy | High temperature energy |
|---|---|---|---|---|
| N=1 (Comparative example 2-1) | 16.1 | 17.4 | 1.37 | 1.08 |
| N=2 (Comparative example 2-2) | 17.1 | 16.2 | 1.54 | 1.00 |
| N=3 (Comparative example 2-3) | 16.5 | 16.0 | 1.55 | 1.04 |
| N=4 (Comparative example 2-4) | 18.0 | 15.7 | 1.58 | 1.05 |
| N=5 (Comparative example 2-5) | 17.4 | 17.1 | 1.60 | 1.06 |
| N=6 (Comparative example 2-6) | 16.8 | 17.5 | 1.53 | 1.10 |
| N=7 (Comparative example 2-7) | 18.1 | 16.7 | 1.65 | 1.09 |
| N=8 (Comparative example 2-8) | 17.5 | 16.8 | 1.52 | 1.06 |
| N=9 (Comparative example 2-9) | 17.6 | 15.9 | 1.65 | 0.99 |
| N=10 (Comparative example 2-10) | 17.2 | 16.7 | 1.62 | 1.10 |

As shown above, the working examples exhibited better characteristics than the comparative examples in terms of ambient temperature maximum sealing strength and high temperature maximum sealing strength. In addition, ambient temperature energy, high temperature energy, ambient temperature maximum stroke, and high temperature maximum stroke were all better than the comparative examples.

Thus, it can be seen that the working examples not only have superior sealing strength characteristics at ambient temperature and high temperature, but also superior sealing strength maintenance characteristics at ambient temperature and high temperature compared to the comparative examples.

While non-limiting and exemplary embodiments of the present disclosure have been described above, the technical idea of the present disclosure is not limited to the accompanying drawings or the above description. It will be apparent to a skilled person in the art that various modifications are possible without departing from the technical ideas of the present disclosure, and that such modifications fall within the scope of the claims of the present disclosure.

## Claims

1. A secondary battery pouch film comprising at least an outer layer, a barrier layer, and a sealant layer structured in that order,

   wherein the sealant layer is extrusion laminated by an extrusion coating layer, and
   wherein the sealant layer thickness T1 and T2 satisfy [Formula 1] and/or [Formula 2], respectively

$$[\text{Formula 1}]$$

$$0.6 < T1 / T2 < 0.85$$

$$[\text{Formula 2}]$$

$$30\mu m < T2 - T1 < 85\mu m$$

   wherein T1 and T2 are measured according to a tear test method,

   wherein in said tear test method:

   a secondary battery pouch film is folded in half, with the sealant layer facing each other, and sealed at 200°C for 1.6 seconds;
   after sealing, the sample size is 20cm wide by 5cm long, and the sample is cut into 1.5cm long strips;
   both ends of the sample are grasped with the universal testing machine (UTM) and pulled (the pulling condition is 5 mm/min);
   after pulling to tear at least about 5 mm from the sealing part of the pouch film, the thickness (T1) of the side (upper side) where the thickness of the tear is relatively thin or the same, and the thickness (T2) of the side (lower side) where the thickness of the tear is relatively thick or the same is measured, respectively, using a thickness gauge.

2. The secondary battery pouch film of claim 1, wherein the maximum ambient temperature sealing strength measured value when sealed under 220°C sealing conditions is at least 150 N/15 mm and no more than 205 N/15 mm in the TD direction, as measured by a method of measuring maximum sealing strength at ambient temperature when sealed under the condition of sealing at 220°C,
   wherein in said method of measuring maximum sealing strength at ambient temperature when sealed under the condition of sealing at 220°C:

   after producing a secondary battery pouch film in the size of 100 mm x 200 mm, the secondary battery pouch film is folded in half and sealed, and then cut to a size of 15 mm in width in a direction perpendicular to the sealing direction;
   the sealing is carried under a sealing condition of a seal bar width of 200 mm x a seal thickness of 10 mm, 2.0 seconds, 0.2 MPa, and a temperature of 220°C;
   the sealing strength of a specimen in each of the MD and TD directions is measured at ambient temperature by a sealing strength meter, and the measurement is carried under a condition of a test speed of 10 mpm and a grip gap of 30 mm;
   a maximum value of the sealing strength measurement values is a maximum sealing strength.

3. The secondary battery pouch film of any one of claims 1 to 2, wherein the maximum high temperature sealing strength measured value (measured value of sealing strength after leaving at 60°C for 3 minutes) when sealed under 220°C sealing conditions is not less than 115 N/15 mm and not more than 170 N/15 mm in the TD direction, as measured by a method of measuring maximum sealing strength at high temperature when sealed under the condition of sealing at 220°C,
   wherein in said method of measuring maximum sealing strength at high temperature when sealed under the condition of sealing at 220°C:

   after producing a secondary battery pouch film in the size of 100 mm x 200 mm, the secondary battery pouch film is folded in half and sealed, and then cut to a size of 15 mm in width in a direction perpendicular to the sealing direction;

the sealing is carried under a sealing condition of a seal bar width of 200 mm x a seal thickness of 10 mm, 2.0 seconds, 0.2 MPa, and a temperature of 220°C;

the sealing strength of a specimen in at least one of the MD and TD directions is measured after being left at 60°C for 3 minutes by a sealing strength meter, and the measurement is carried under a condition of a test speed of 10 mpm and a grip gap of 30 mm;

a maximum value of the sealing strength measurement values is a maximum sealing strength.

4. The secondary battery pouch film of any one of claims 1 to 3, wherein the secondary battery pouch film has a ambient temperature energy in the TD direction of 2.0 to 3.0 KN x mm when sealed under 220°C sealing conditions as measured by a method of measurement of ambient temperature energy in TD direction when sealed under condition of sealing at 220°C,

wherein in said method of measurement of ambient temperature energy in TD direction when sealed under condition of sealing at 220°C:

after producing a secondary battery pouch film in the size of 100 mm x 200 mm, the secondary battery pouch film is folded in half and sealed, and then cut to a size of 15 mm in width in a direction perpendicular to the sealing direction;

the sealing is carried under a sealing condition of a seal bar width of 200 mm, a seal thickness of 10 mm, 2.0 seconds, 0.2 MPa, and a temperature of 220°C;

the sealing strength change is measured by pulling the specimen in the TD direction with the sealing strength meter at ambient temperature, and the measurement is carried under a condition of a test speed of 10 mpm and a grip gap of 30 mm;

when the X-axis is a stroke (distance) of pulling the sealing part in the TD direction and the Y-axis is a sealing strength, an area between the graph for sealing strength change according to the stroke and the X-axis representing the stroke - an integral value of the graph for sealing strength change according to the stroke - is defined as an ambient temperature energy, where the integral value is obtained by integrating the stroke in the range of 0 mm to 20 mm.

5. The secondary battery pouch film of any one of claims 1 to 4, wherein the high temperature energy in the TD direction is 1.5 to 2.5 KN x mm when sealed under 220°C sealing conditions as measured by a method of measurement of high temperature energy in TD direction when sealed under condition of sealing at 220°C,

wherein in said method of measurement of high temperature energy in TD direction when sealed under condition of sealing at 220°C:

after producing a secondary battery pouch film in the size of 100 mm x 200 mm, the secondary battery pouch film is folded in half and sealed, and then cut to a size of 15 mm in width in a direction perpendicular to the sealing direction;

the sealing is carried under a sealing condition of a seal bar width of 200 mm, a seal thickness of 10 mm, 2.0 seconds, 0.2 MPa, and a temperature of 220°C;

the sealing strength change is measured by pulling the specimen in the TD direction with the sealing strength meter at high temperature after being left for 3 minutes at 60°C, and the measurement is carried under a condition of a test speed of 10 mpm and a grip gap of 30 mm;

when the X-axis is a stroke (distance) of pulling the sealing part in the TD direction and the Y-axis is the sealing strength, an area between the graph for sealing strength change according to the stroke and the X-axis representing the stroke - an integral value of the graph for sealing strength change according to the stroke - is defined as a high temperature energy, where the integral value is obtained by integrating the stroke in the range of 0 mm to 20 mm.

6. The secondary battery pouch film of any one of claims 1 to 5, wherein the difference between the ambient temperature energy and the high temperature energy in the TD direction when sealed under 220°C sealing conditions is 0.4 - 0.6 KN x mm, as measured by a method of measurement of ambient temperature energy and high temperature energy in the TD direction when sealed under condition of sealing at 220°C,

wherein in said method of measurement of ambient temperature energy and high temperature energy in the TD direction when sealed under condition of sealing at 220°C:

after producing a secondary battery pouch film in the size of 100 mm x 200 mm, the secondary battery pouch film is folded in half and sealed, and then cut to a size of 15 mm in width in a direction perpendicular to the sealing direction;

the sealing is carried under a sealing condition of a seal bar width of 200 mm x a seal thickness of 10 mm, 2.0 seconds, 0.2 MPa, and a temperature of 220°C;

the change in the sealing strength is measured by pulling the specimen in the TD direction with the sealing strength meter at ambient temperature or at high temperature after being left for 3 minutes at 60°C, and the measurement is carried under a condition of a test speed of 10 mpm and a grip gap of 30 mm;

when the X-axis is a stroke (distance) of pulling the sealing part in the TD direction and the Y-axis is the sealing strength, an area between the graph for sealing strength change according to the stroke and the X-axis representing the stroke - an integral value of the graph for sealing strength change according to the stroke - is defined as an ambient temperature energy or a high temperature energy, wherein the integral value is obtained by integrating the stroke in the range of 0 mm to 20 mm;

the energy measured at ambient temperature is an ambient temperature energy, and the energy measured at high temperature is a high temperature energy.

7. The secondary battery pouch film of any one of claims 1 to 6, wherein the ambient temperature maximum stroke in the TD direction is 15 to 25 mm when sealed under 220°C sealing conditions as measured by a method of measurement of ambient temperature maximum stroke in TD direction when sealed under condition of sealing at 220°C, wherein in said method of measurement of ambient temperature maximum stroke in TD direction when sealed under condition of sealing at 220°C:

after producing a secondary battery pouch film in the size of 100 mm x 200 mm, the secondary battery pouch film is folded in half and sealed, and then cut to a size of 15 mm in width in a direction perpendicular to the sealing direction;

the sealing is carried under a sealing condition of a seal bar width of 200 mm x a seal thickness of 10 mm, 2.0 seconds, 0.2 MPa, and a temperature of 220°C;

the sealing strength change is measured by pulling the specimen in the TD direction with the sealing strength meter at ambient temperature, and the measurement is carried under a condition of a test speed of 10 mpm and a grip gap of 30 mm;

when the X-axis is a stroke (distance) of pulling the sealing part in the TD direction and the Y-axis is the sealing strength, a sealing strength curve increases as the stroke increases, and the stroke (distance) at which the sealing strength value is maximum is evaluated as a maximum stroke.

8. The secondary battery pouch film of any one of claims 1 to 7, wherein the high temperature maximum stroke in the TD direction is 18 to 24 mm when sealed under 220°C sealing conditions as measured a method of measurement of high temperature maximum stroke in TD direction when sealed under condition of sealing at 220°C, wherein in said method of measurement of high temperature maximum stroke in TD direction when sealed under condition of sealing at 220°C:

after producing a secondary battery pouch film in the size of 100 mm x 200 mm, the secondary battery pouch film is folded in half and sealed, and then cut to a size of 15 mm in width in a direction perpendicular to the sealing direction;

the sealing is carried under a sealing condition of a seal bar width of 200 mm x a seal thickness of 10 mm, 2.0 seconds, 0.2 MPa, and a temperature of 220°C;

the sealing strength change is measured by pulling the specimen in the TD direction with the sealing strength meter at high temperature after being left for 3 minutes at 60°C, and the measurement is carried under a condition of a test speed of 10 mpm and a grip gap of 30 mm;

when the X-axis is a stroke (distance) of puling the sealing part in the TD direction and the Y-axis is the sealing strength, the sealing strength curve increases as the stroke increases, and the stroke (distance) at which the sealing strength value is maximum is evaluated as the maximum stroke.

9. A secondary battery, wherein the battery is encased in the secondary battery pouch film of any one of claims 1 to 8.

10. The secondary battery of claim 9, wherein the secondary battery is for use in an electric vehicle or energy storage device.

11. A method for manufacturing a secondary battery, comprising encasing the secondary battery in the secondary battery pouch film of any one of claims 1 to 8.

Fig 1

| Outer layer |  |
|:---:|:---:|
| Matal layer |  |
| Sealant layer | Extruded PP layer |
|  | CPP layer |

Fig 2

Europäisches
Patentamt

European
Patent Office

Office européen
des brevets

# EUROPEAN SEARCH REPORT

Application Number

EP 23 22 0788

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 102 184 118 B1 (YOULCHON CHEMICAL CO LTD [KR]) 27 November 2020 (2020-11-27) <br> * abstract; claims 1-13 * <br> * paragraphs [0029], [0032] * <br> * paragraphs [0046] - [0048] * <br> * paragraphs [0049] - [0051] * <br> * paragraphs [0045], [0059] * <br> ----- | 1-11 | INV. <br> B32B1/00 <br> B32B27/08 <br> B32B27/32 <br> B32B27/34 <br> B32B27/36 <br> C08J5/18 <br> H01M50/105 |
| X | KR 2020 0017133 A (UNIV NAT HANBAT IND ACAD COOP FOUND [KR]; TOPNC CO LTD [KR]) 18 February 2020 (2020-02-18) <br> * abstract; claims 1-9 * <br> * paragraphs [0016], [0017], [0021], [0022] * <br> * paragraph [0049] * <br> * paragraphs [0076] - [0082] * <br> ----- | 1-11 | H01M50/126 <br> H01M50/129 <br> B32B15/08 <br> B32B15/085 <br> B32B15/088 <br> B32B15/09 <br> B32B15/18 |

TECHNICAL FIELDS
SEARCHED (IPC)

B32B
H01M
C08J

The present search report has been drawn up for all claims

| Place of search | Date of completion of the search | Examiner |
|---|---|---|
| The Hague | 22 April 2024 | Bergmans, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 22 0788

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2024

| Patent document cited in search report | | Publication date | Patent family member(s) | | Publication date |
|---|---|---|---|---|---|
| KR 102184118 | B1 | 27-11-2020 | NONE | | |
| KR 20200017133 | A | 18-02-2020 | CN | 110828709 A | 21-02-2020 |
| | | | KR | 20200017133 A | 18-02-2020 |

EPO FORM P0459

For more details about this annex : see Official Journal of the European Patent Office, No. 12/82